# EUROPEAN PATENT SPECIFICATION

(11) **EP 3 626 534 B1**
(45) Date of publication and mention of the grant of the patent: **18.09.2024**
(21) Application number: 18802524.1
(22) Date of filing: 08.05.2018
(51) Int. Cl.: F21S 41/663, F21S 41/675, F21S 41/147, F21S 41/151

(54) **OPTICAL UNIT FOR A VEHICLE HEADLAMP**
OPTISCHE EINHEIT FÜR EINEN FAHRZEUGSCHEINWERFER
UNITÉ OPTIQUE POUR UN PHARE AUTOMOBILE

(30) Priority: 17.05.2017 JP 2017098228
(43) Date of publication of application: 25.03.2020
(73) Proprietor: Koito Manufacturing Co., Ltd., Tokyo 108-8711 (JP)
(72) Inventor: TANAKA, Hidetada, Shizuoka-shi Shizuoka 424-8764 (JP); SAKURAI, Kazutoshi, Shizuoka-shi Shizuoka 424-8764 (JP); AISO, Yoshiaki, Shizuoka-shi Shizuoka 424-8764 (JP)
(74) Representative: Algemeen Octrooi- en Merkenbureau B.V.
(86) International application number: PCT/JP2018/017712
(87) International publication number: WO 2018/212010

(56) References cited:
- EP-A2- 2 103 868
- WO-A1-2014/121314
- WO-A1-2016/104319
- WO-A1-2017/020055
- JP-A- 2009 224 039
- JP-A- 2014 089 990
- JP-A- 2014 216 049
- JP-A- 2016 088 283
- JP-A- 2017 037 806
- JP-A- 2017 037 806
- US-A1- 2014 313 755
- US-A1- 2015 307 018

## Description

### [TECHNICAL FIELD]

The present invention relates to an optical unit for use in a vehicle lamp as outlined in the preamble of claim 1.

### [BACKGROUND ART]

In one device devised in recent years, light emitted from a light source is reflected forward from the vehicle, and the reflected light is scanned over a region ahead of the vehicle to form a predetermined light-distribution pattern. For example, there has been devised an optical unit that includes a plurality of light sources composed of light-emitting elements and a rotary reflector that rotates unidirectionally about an axis of rotation while reflecting light emitted from the light sources. The rotary reflector includes a reflective surface provided to form a desired light-distribution pattern with the light from the light sources reflected by the rotating rotary reflector (patent document 1).

This optical unit can also form a non-irradiation region in a portion of a light-distribution pattern by turning off a light-emitting element at a predetermined timing.

WO 2016/104319 A1 discloses a lighting circuit and vehicular lighting device in which blade receives light emitted from a light source and repeats a predetermined periodic motion to scan the front of a vehicle with reflected light of the emitted light.

US 2014/313755 A1 discloses a vehicular lamp including a movable reflector, a first light-emitting unit, a second light-emitting unit and a light control member that collects and projects reflected light.

WO 2014121314 A1 describes a headlight for motor vehicles incorporating the features of the preamble of claim 1. A further vehicle headlamp is known from JP 2014 089990 A.
patent document 1: JP2015-26628

### [PROBLEM TO BE SOLVED BY THE INVENTION]

The above-described optical unit, however, has a limitation in terms of the shape of the light-distribution pattern that can be formed, and there remains room for further improvement.

The present invention has been made in view of the above and is directed to providing a novel optical unit that can form a plurality of light-distribution patterns with a simple configuration.

### [MEANS TO SOLVE THE PROBLEM]

To solve the foregoing issue, an optical unit as set out in the characterizing part of the appended claim 1 is provided.

The invention provides a difference between the length of a region formed as the light emitted from the first light-emitting element is scanned as a light source image and the length of a region formed as the light emitted from the second light-emitting element is scanned as a light source image. This configuration makes it possible to form a greater number of light-distribution patterns with different shapes as compared to a case in which the status of each light-emitting element can be selected only from being continuously on and being continuously off.

In the light source, the first light-emitting element and the second light-emitting element are arrayed in a direction intersecting a direction in which the light is scanned as the light source image. This configuration can form a step-like light-distribution pattern with a small number of light-emitting elements.

The plurality of light-emitting elements includes a third light-emitting element. The third light-emitting element is disposed so as to scan a region that overlaps a region that the first light-emitting element scans and a region that the second light-emitting element scans, and the controller controls an output of the third light-emitting element such that a duration T3 for which the third light-emitting element is on satisfies T1 > T3 > T2. This configuration forms a step-like light-distribution pattern with a smaller step.

The controller controls the on state of the plurality of light-emitting elements such that the light-distribution pattern has a cutoff line on a host vehicle's lane side that rises obliquely or stepwise toward an outer side. This configuration forms a light-distribution pattern having an oblique cutoff line suitable for a vehicle headlamp.

In the light source, the plurality of light-emitting elements may be disposed in a matrix of m rows by n columns (m and n may each be an integer no smaller than 2), and the light-emitting elements in a (k-1)th column may be disposed unlevel with the light-emitting elements in a kth column by approximately one-nth of a pitch (k may be an integer no greater than n). This configuration can form a step-like light-distribution pattern with a smaller step.

Any optional combination of the above constituent elements or an embodiment obtained by converting what is expressed by the present invention among a method, an apparatus, a system, and so on is also effective as an embodiment of the present invention.

### [ADVANTAGE OF THE PRESENT INVENTION]

With the present invention, a plurality of light-distribution patterns can be formed with a simple configuration.

### [BRIEF DESCRIPTION OF THE DRAWINGS]

Fig. 1 is a horizontal sectional view of a vehicle headlamp according to an embodiment;
Fig. 2 is a front view of a vehicle headlamp according to an embodiment;
Fig. 3 is a side view schematically illustrating a configuration of a rotary reflector according to an embodiment;
Fig. 4 is a top view schematically illustrating a configuration of a rotary reflector according to an embodiment;
Fig. 5 is a schematic diagram in which a first light source according to an embodiment is viewed from the front;
Fig. 6(a) is a schematic diagram illustrating a state in which light source images of a first light emitter and a third light emitter that are on are reflected and projected forward by a stationary rotary reflector, and Fig. 6(b) illustrates a first light-distribution pattern formed as the light source images illustrated in Fig. 6(a) are scanned by the rotating rotary reflector;
Fig. 7(a) is a schematic diagram illustrating a state in which a light source image of a second light emitter that is on is reflected and projected forward by a stationary rotary reflector, and Fig. 7(b) illustrates a second light-distribution pattern formed as the light source image illustrated in Fig. 7(a) is scanned by the rotating rotary reflector;
Fig. 8(a) is a schematic diagram illustrating a state in which a light source image of a fourth light emitter that is on is reflected and projected forward by a stationary rotary reflector, and Fig. 8(b) illustrates a third light-distribution pattern formed as the light source image illustrated in Fig. 8(a) is scanned by the rotating rotary reflector;
Fig. 9 illustrates a high-beam light-distribution pattern PH' formed when all the light-emitting elements in the first light source and the second light source are turned on to scan the light;
Fig. 10 illustrates a control device of a vehicle headlamp according to an embodiment;
Fig. 11(a) is a schematic diagram illustrating a state in which light source images of a first light emitter to a third light emitter that are on are reflected and projected forward by a stationary rotary reflector, and Fig. 11(b) illustrates a fourth light-distribution pattern formed as the light source images illustrated in Fig. 11(a) are scanned by the rotating rotary reflector;
Fig. 12(a) is a schematic diagram in which a light source according to a second embodiment is viewed from the front, Fig. 12(b) illustrates a high-beam light-distribution pattern formed by an optical unit according to the second embodiment, and Fig. 12(c) illustrates another high-beam light-distribution pattern formed by the optical unit according to the second embodiment;
Fig. 13 is a horizontal sectional view of a vehicle headlamp according to a third embodiment which does not form part of the invention;
Fig. 14 is a schematic diagram for comparing the size of light source images obtained with varied outputs of a light-emitting element having a rectangular light-emitting surface;
Fig. 15 is a schematic diagram illustrating an example of a light-distribution pattern; and
Fig. 16(a) is a schematic diagram illustrating a state in which a light source image of a light emitter that is on according to a fourth embodiment is reflected and projected forward by a stationary rotary reflector, and Fig. 16(b) illustrates a fifth light-distribution pattern formed as the light source image illustrated in Fig. 16(a) is scanned by the rotating rotary reflector.

### [MODE FOR CARRYING OUT THE INVENTION]

Hereinafter, the present invention will be described on the basis of embodiments with reference to the drawings. Identical or equivalent constituent elements, members, and processes illustrated in the drawings are given identical reference characters, and duplicate descriptions thereof will be omitted as appropriate. The embodiments are illustrative in nature and are not intended to limit the invention. Not all the features and combinations thereof described in the embodiments are necessarily essential to the invention.

An optical unit according to the embodiments can find its use in a variety of vehicle lamps. In the cases described hereinafter, the optical unit according to the embodiments is applied to, among vehicle lamps, a vehicle headlamp.

### [First Embodiment]

### (Vehicle Headlamp)

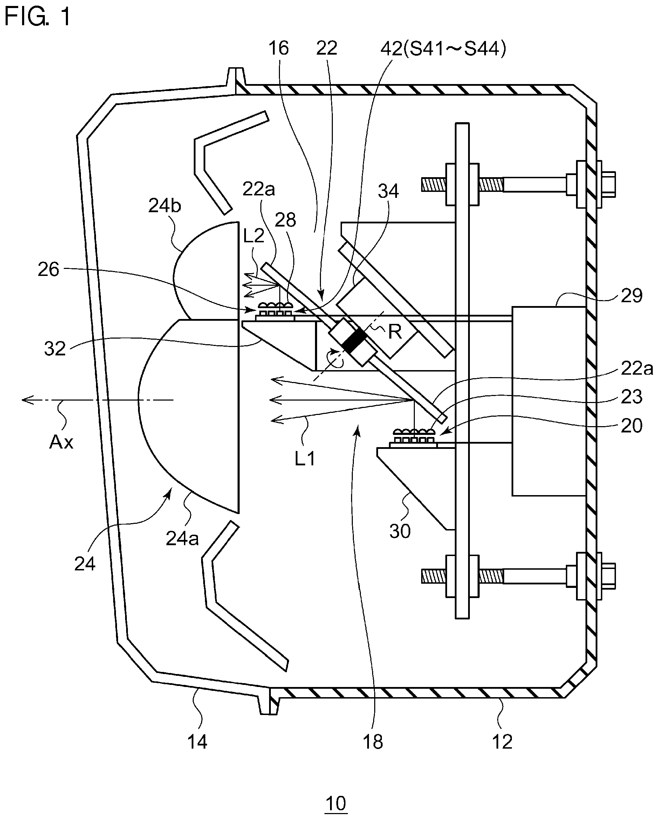

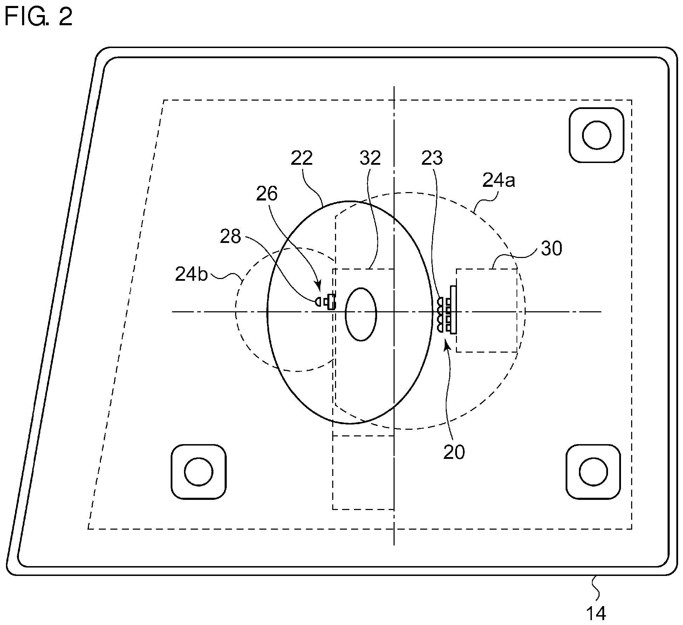

Fig. 1 is a horizontal sectional view of a vehicle headlamp according to the present embodiment. Fig. 2 is a front view of the vehicle headlamp according to the present embodiment. Fig. 2 omits some of the components.

A vehicle headlamp 10 according to the present embodiment is a right-side headlamp to be mounted in a vehicle's front right portion and has the same structure as a headlamp to be mounted in the left side except that these headlamps are horizontally symmetric. Therefore, the right-side vehicle headlamp 10 will be described below in detail, and the description of the left-side vehicle headlamp will be omitted.

As illustrated in Fig. 1, the vehicle headlamp 10 includes a lamp body 12 having a concave portion that opens toward the front. The front opening of the lamp body 12 is covered by a transparent front cover 14 to form a lamp room 16. The lamp room 16 functions as a space that houses one optical unit 18. The optical unit 18 is a lamp unit configured to be capable of emitting both a variable high beam and a low beam. A variable high beam refers to a high beam that is being so controlled as to change the shape of a high-beam light-distribution pattern. For example, a non-irradiation region (shaded portion) can be produced in a portion of a light-distribution pattern.

The optical unit 18 according to the present embodiment includes a first light source 20, a condenser lens 23, a rotary reflector 22, a projection lens 24, a second light source 26, a diffuser lens 28, and a controller 29. The condenser lens 23, serving as a primary optical system (optical member), redirects an optical path of first light L1 emitted from the first light source 20 toward blades 22a of the rotary reflector 22. The rotary reflector 22 rotates about an axis of rotation R while reflecting the first light L1. The second light source 26 is disposed between the first light source 20 and the projection lens 24. The diffuser lens 28, serving as a primary optical system (optical member), redirects second light L2 emitted from the second light source 26 toward the blades 22a.

The first light source 20 includes 16 elements disposed in a matrix. The second light source 26 includes four elements arrayed in a line.

The projection lens 24 includes a condenser 24a and a diffuser 24b. The condenser 24a condenses the first light L1 reflected by the rotary reflector 22 and projects the condensed first light L1 in a light-irradiation direction of the optical unit (the left direction in Fig. 1). The diffuser 24b diffuses the second light L2 reflected by the rotary reflector 22 and projects the diffused second light L2 in the light-irradiation direction of the optical unit. This configuration makes it possible project a clear light source image toward a space ahead of the optical unit 18.

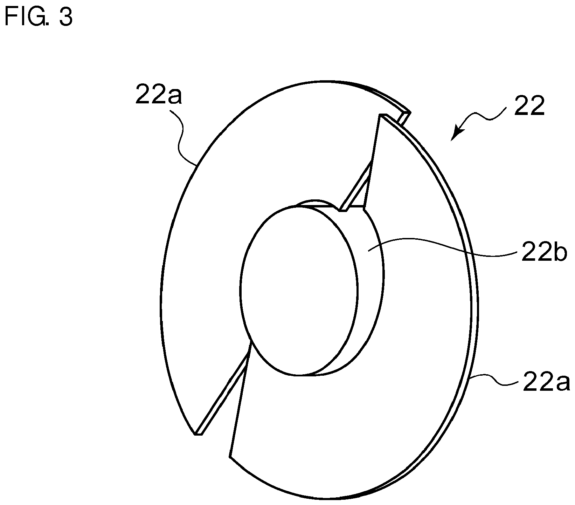

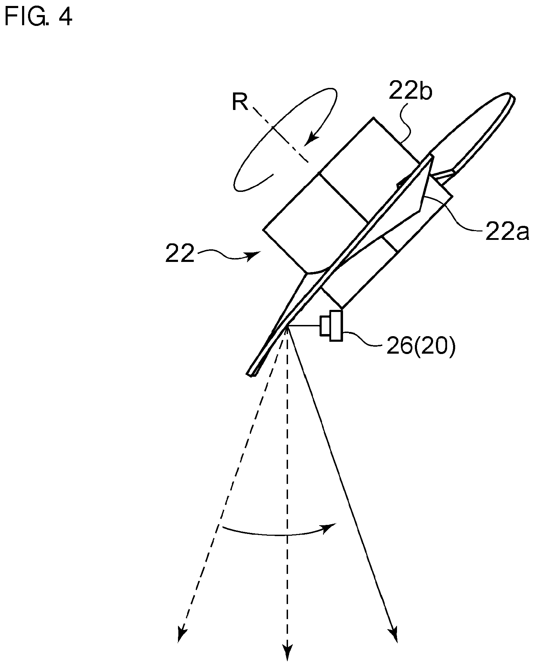

Fig. 3 is a side view schematically illustrating a configuration of the rotary reflector according to the present embodiment. Fig. 4 is a top view schematically illustrating a configuration of the rotary reflector according to the present embodiment.

The rotary reflector 22 rotates with a driving source, such as a motor 34, unidirectionally about the axis of rotation R. The rotary reflector 22 includes the blades 22a, serving as a reflective surface, provided to form a desired light-distribution pattern by scanning light from each light source reflected by the rotating rotary reflector 22. In other words, the rotating operation of the rotary reflector causes visible light from a light emitter to be emitted as an irradiation beam, and a desired light-distribution pattern is formed as the rotary reflector 22 scans the irradiation beam.

The rotary reflector 22 includes the two blades 22a, which function as a reflective surface and are identical in shape, and the two blades 22a are provided around a cylindrical rotary portion 22b. The axis of rotation R of the rotary reflector 22 is at an angle relative to an optical axis Ax and lies in a plane that includes the optical axis Ax and each light source. To rephrase, the axis of rotation R extends substantially parallel to a scanning plane of light (irradiation beam) from each light source that is scanned in the right-left direction as the rotary reflector 22 rotates. This configuration reduces the thickness of the optical unit. Herein, the scanning plane can be regarded as a fan-shaped plane formed by continuously connecting the trajectories of light from each light source, or the scanning light, for example.

Each blade 22a of the rotary reflector 22 has a twisted shape in which the angle formed by the optical axis Ax and the reflective surface changes along the circumferential direction about the axis of rotation R. This configuration enables the scan with the light from the first light source 20 and the second light source 26, as illustrated in Fig. 4.

Each light source is a semiconductor light-emitting element, such as an LED, an EL element, or an LD element. The shape of the convex projection lens 24 having the condenser 24a and the diffuser 24b may be selected as appropriate in accordance with the light-distribution characteristics, such as a required light-distribution pattern or an illuminance distribution. An aspherical lens or a free-form surface lens can also be used as the projection lens 24.

The controller 29 controls the on/off of the first light source 20 and the second light source 26 and controls the rotation of the motor 34 in accordance with a control signal from the outside. The first light source 20 is mounted on a heat sink 30, and the second light source 26 is mounted on a heat sink 32.

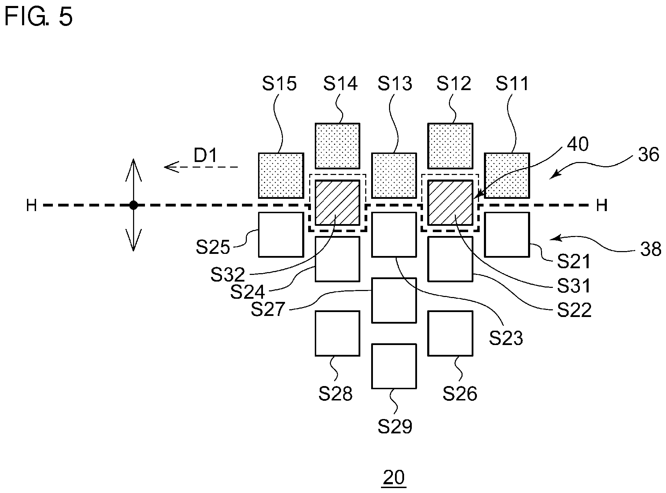

Fig. 5 is a schematic diagram in which the first light source according to the present embodiment is viewed from the front. Fig. 5 omits the condenser lens 23. The light source image illustrated in Fig. 5 is inverted vertically by the projection lens 24.

As illustrated in Fig. 5, the first light source 20 includes a first light emitter 36, a second light emitter 38, and a third light emitter 40. The first light emitter 36 is turned on to form a first light-distribution pattern that irradiates mainly a range below a horizontal line. The second light emitter 38 is turned on to form a second light-distribution pattern that irradiates at least a range above the horizontal line. The third light emitter 40 emits light for defining a cutoff line on the host vehicle's lane side near the horizontal line when the first light-distribution pattern is formed. The third light emitter 40 is disposed in a region between the first light emitter 36 and the second light emitter 38.

The first light emitter 36 includes five first light-emitting elements S11 to S15 disposed in a zigzag manner along the horizontal direction (H-H line) (to rephrase, the position of one element in the vertical direction is offset upward or downward relative to the position of its adjacent element). The first light-emitting elements S11 to S15 each have a rectangular light-emitting surface and are each disposed with one side of the rectangle extending in the horizontal direction.

The second light emitter 38 includes nine second light-emitting elements S21 to S29 disposed in a zigzag manner along the horizontal direction. The second light-emitting elements S21 to S29 each have a rectangular light-emitting surface and are each disposed with one side of the rectangle extending in the horizontal direction.

The third light emitter 40 includes two third light-emitting elements S31 and S32 disposed between the first light-emitting elements S11 to S15 and the second light-emitting elements S21 to S29. The third light-emitting elements S31 and S32 are each disposed with one side of its rectangular light-emitting surface extending in the horizontal direction. This configuration makes a dark portion resulting from a gap between the elements less likely to occur in a light-distribution pattern.

Each light-emitting element is preferably a semiconductor light-emitting element that can be easily controlled on/off in a short period of time, and examples include an LED (Light Emitting Device), an LD (Laser Diode), and an EL (Electroluminescent) element.

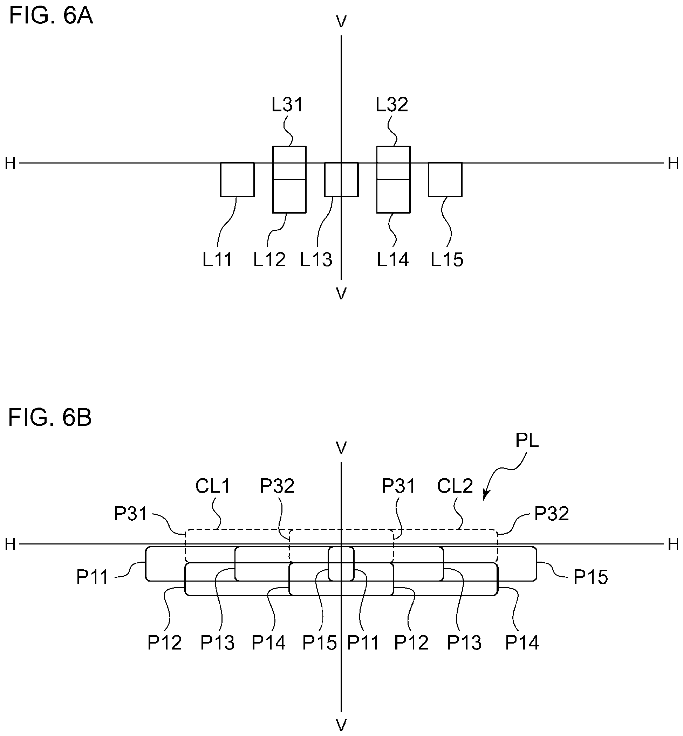

Fig. 6(a) is a schematic diagram illustrating a state in which light source images of the first light emitter and the third light emitter that are on are reflected and projected forward by the stationary rotary reflector. Fig. 6(b) illustrates a first light-distribution pattern formed as the light source images illustrated in Fig. 6(a) are scanned by the rotating rotary reflector.

Light source images L11 to L15 illustrated in Fig. 6(a) correspond to the light-emitting surfaces of the respective first light-emitting elements S11 to S15. Light source images L31 and L32 correspond to the light-emitting surfaces of the respective third light-emitting elements S31 and S32. As the light source images L11 to L15, L31, and L32 are scanned, scan patterns P11 to P15, P31, and P32 illustrated in Fig. 6(b) are formed, and as the scan patterns are superposed on each other, a low-beam light-distribution pattern PL serving as the first light-distribution pattern that irradiates mainly a range below the horizontal line is formed.

If the third light-emitting elements S31 and S32 are kept on, like the first light-emitting elements S11 to S15, not only a cutoff line CL1 on the host vehicle's lane side but also a cutoff line CL2 on the oncoming vehicle's lane side is formed above the horizontal line in the low-beam light-distribution pattern PL, as illustrated in Fig. 6(b). This may cause glare on an occupant in an oncoming vehicle.

Therefore, the controller 29 controls the on state of the first light source 20 such that the on duration of the third light-emitting elements S31 and S32 is shorter than the on duration of the first light-emitting elements S11 to S15 when the low-beam light-distribution pattern PL is formed. To be more specific, the controller 29 turns on the corresponding element at a timing at which the light source image L31 or L32 of the third light-emitting element S31 or S32 passes through a region on the left side of the V-V line indicated in Fig. 6(b) and turns off the corresponding element at a timing at which the light source image L31 or L32 passes through a region on the right side of the V-V line. This control makes it possible to raise only an upper end of the cutoff line CL1 on the host vehicle's lane side, for example. In addition, the position (length) of the cutoff line CL1 on the host vehicle's lane side can be changed by controlling the on/off of the third light-emitting elements S31 and S32 while scanning the light emitted from the third light-emitting elements S31 and S32.

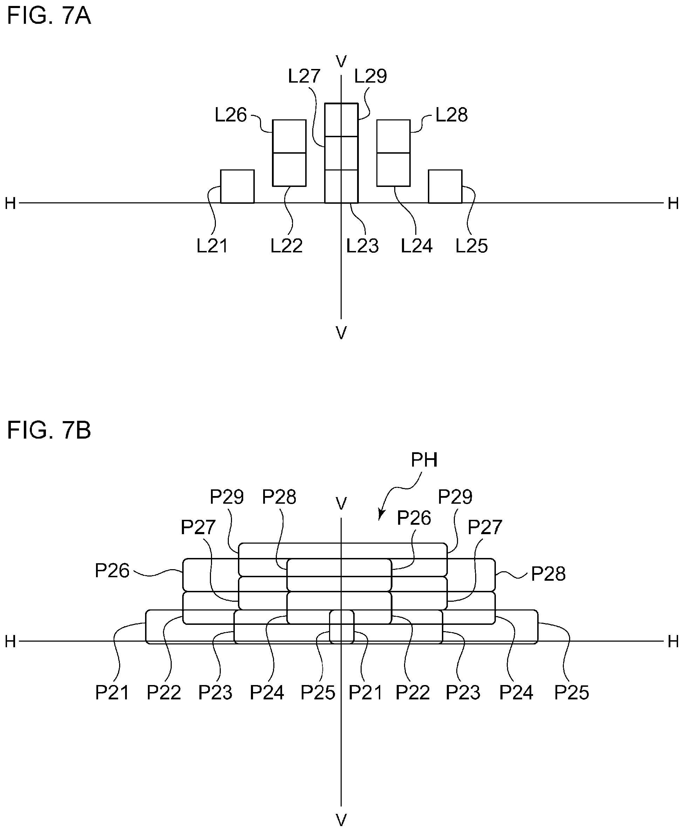

Fig. 7(a) is a schematic diagram illustrating a state in which a light source image of the second light emitter that is on is reflected and projected forward by the stationary rotary reflector. Fig. 7(b) illustrates a second light-distribution pattern formed as the light source image illustrated in Fig. 7(a) is scanned by the rotating rotary reflector.

Light source images L21 to L29 illustrated in Fig. 7(a) correspond to the light-emitting surfaces of the respective second light-emitting elements S21 to S29. As the light source images L21 to L29 are scanned, scan patterns P21 to P29 illustrated in Fig. 7(b) are formed, and as the scan patterns are superposed on each other, a high-beam light-distribution pattern PH serving as the second light-distribution pattern that irradiates at least a range above the horizontal line is formed. The first light emitter 36 may be turned on when the high-beam light-distribution pattern PH is formed. This can achieve a new light-distribution pattern in which the low-beam light-distribution pattern PL and the high-beam light-distribution pattern PH are superposed on each other.

Now, the second light source 26 will be described. The second light L2 emitted from the second light source 26 is reflected off a blade of the rotary reflector 22 at a position that is closer to the projection lens 24 than the position where the first light L1 emitted from the first light source 20 is reflected off a blade of the rotary reflector 22. Thus, it is better if the light emitted from the second light source 26 spreads in order to irradiate a broader range. Therefore, the diffuser lens 28 is disposed near the light-emitting surface of the second light source 26. This configuration can enlarge a light source image formed by the second light L2 that has been reflected by the rotary reflector 22 and passed through the diffuser 24b of the projection lens 24. The second light source 26 includes a fourth light emitter 42 having four fourth light-emitting elements S41 to S44 arrayed in a line (see Fig. 1).

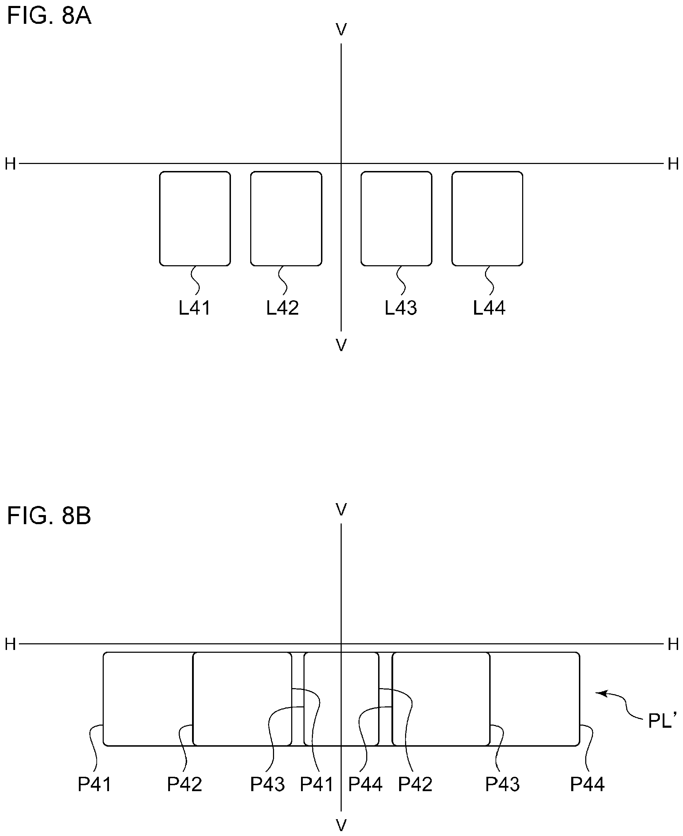

Fig. 8(a) is a schematic diagram illustrating a state in which a light source image of the fourth light emitter that is on is reflected and projected forward by the stationary rotary reflector. Fig. 8(b) illustrates a third light-distribution pattern formed as the light source image illustrated in Fig. 8(a) is scanned by the rotating rotary reflector.

Light source images L41 to L44 illustrated in Fig. 8(a) correspond to the light-emitting surfaces of the respective fourth light-emitting elements S41 to S44. As the light source images L41 to L44 are scanned, scan patterns P41 to P44 illustrated in Fig. 8(b) are formed, and as the scan patterns are superposed on each other, a diffused low-beam light-distribution pattern PL' serving as the third light-distribution pattern that irradiates mainly a broad range below the horizontal line is formed.

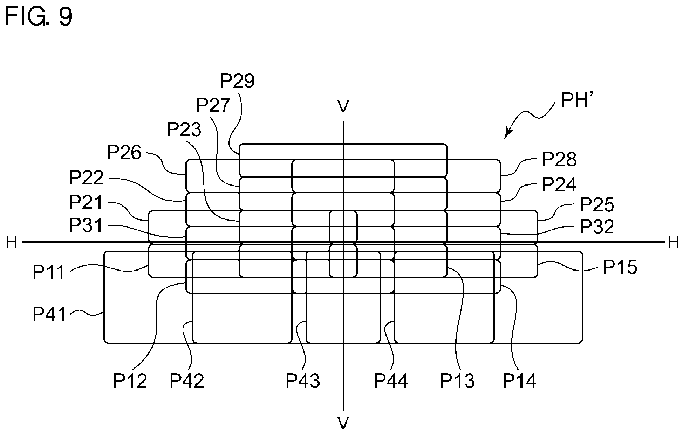

Fig. 9 illustrates a high-beam light-distribution pattern PH' formed when all the light-emitting elements in the first light source and the second light source are turned on to scan the light. As illustrated in Fig. 9, a new light-distribution pattern different from the first light-distribution pattern and the second light-distribution pattern can be achieved.

As described above, the optical unit 18 according to the present embodiment can form a plurality of light-distribution patterns (PL, PL', PH, PH') with different irradiation ranges with the use of the rotary reflector 22 that rotates unidirectionally about the axis of rotation while reflecting the light emitted from the first light source 20 and the second light source 26.

The first light emitter 36 and the second light emitter 38 may be provided as completely different regions, as in the first light source 20 according to the present embodiment. Alternatively, some of the light-emitting elements and/or light-emitting regions may overlap each other. In other words, there may be a light-emitting element or a light-emitting region that is used for both the first light-distribution pattern and the second light-distribution pattern.

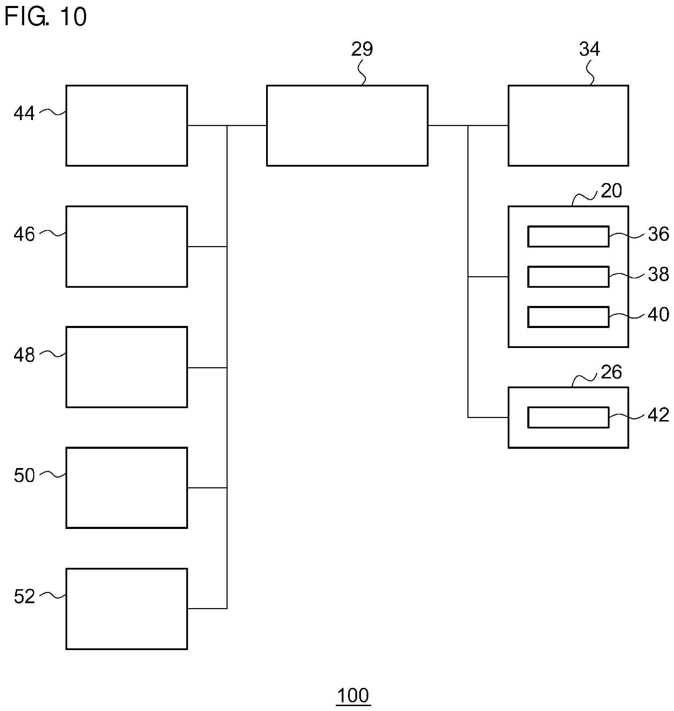

Fig. 10 illustrates a control device of the vehicle headlamp according to the present embodiment. As illustrated in Fig. 10, a control device 100 of the vehicle headlamp 10 according to the present embodiment includes a camera 44, a radar 46, a switch 48, a detector 50, a sensor 52, the controller 29, the motor 34, the first light source 20, and the second light source 26. The camera 44 captures an image of a space ahead of the vehicle and an image of the surroundings of the vehicle. The radar 46 detects the presence of and the distance to another vehicle or a pedestrian in front of the vehicle. The switch 48 allows the driver to control the on state of the vehicle headlamp and its irradiation mode (selection between a high-beam light-distribution pattern and a low-beam light-distribution pattern, automatic control mode, etc.). The detector 50 detects the steering status. The sensor 52 includes, for example, a vehicle-speed sensor and an acceleration sensor.

The controller 29 controls the rotation of the motor 34 and the on/off of each light-emitting element in the first light emitter 36 to the fourth light emitter 42 included in the first light source 20 and the second light source 26 on the basis of information acquired from the camera 44, the radar 46, the switch 48, the detector 50, and the sensor 52. This can achieve the novel optical unit 18 that can form a plurality of light-distribution patterns with a simple configuration.

In the low-beam light-distribution pattern PL obtained by superposing the scan patterns P11 to P15, P31, and P32 on each other as illustrated in Fig. 6(b) and the high-beam light-distribution pattern PH obtained by superposing the scan patterns P21 to P29 on each other as illustrated in Fig. 7(b), each scan pattern has a substantially equal length. In other words, the on durations of the light-emitting elements corresponding to the respective scan patterns are substantially equal. Thus, there is a limitation in the shape of the light-distribution pattern that can be formed by controlling the on/off of the light-emitting elements.

Accordingly, the controller 29 is configured to be capable of controlling the on durations of the plurality of light-emitting elements included in each light source individually or per group. This configuration makes it possible to form a desired light-distribution pattern by combining scan patterns of different lengths, and thus an optical unit that can form light-distribution patterns of a large number of shapes can be achieved.

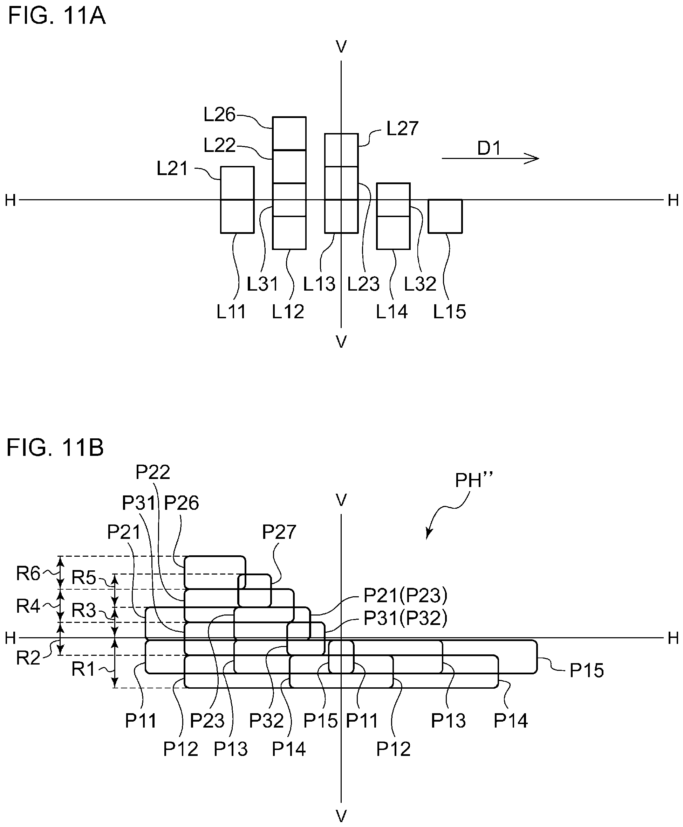

Fig. 11(a) is a schematic diagram illustrating a state in which the light sources images of the first light emitter to the third light emitter that are on are reflected and projected forward by the stationary rotary reflector. Fig. 11(b) illustrates a fourth light-distribution pattern formed as the light source images illustrated in Fig. 11(a) are scanned by the rotating rotary reflector.

The light source images L11 to L15 illustrated in Fig. 11(a) correspond to the light-emitting surfaces of the respective first light-emitting elements S11 to S15. The light source images L21 to L23, L26, and L27 correspond to the light-emitting surfaces of the respective second light-emitting elements S21 to S23, S26, and S27. The light source images L31 and L32 correspond to the light-emitting surfaces of the respective third light-emitting elements S31 and S32. When a fourth light-distribution pattern PH" is formed, the second light-emitting elements S24, S25, S28, and S29 remain off for the entire duration. In other words, it can be said that the second light-emitting elements S24, S25, S28, and S29 have the shortest on duration.

Meanwhile, the first light-emitting elements S11 to S15 have the longest on duration T1 per cycle, and as the scan patterns P11 to P15 illustrated in Fig. 11(b) are formed and these scan patterns are superposed on each other, the first light-emitting elements S11 to S15 irradiate mainly a range R1 below the horizontal line.

The light-emitting element S31 has an on duration of T31 (T31 < T1) per cycle, and the light-emitting element S32 has an on duration of T32 (T32 < T31 < T1) per cycle. As illustrated in Fig. 11(b), the light-emitting elements S31 and S32 irradiate mainly a range R2 including the H-H line on the host vehicle's lane side. The range R2 partially overlaps the range R1.

The light-emitting element S21 has an on duration of T21 (T21 < T1) per cycle, and the light-emitting element S23 has an on duration of T23 (T23 < T21 < T1) per cycle. As illustrated in Fig. 11(b), the light-emitting elements S21 and S23 irradiate mainly a range R3 immediately above the H-H line on the host vehicle's lane side. The range R3 partially overlaps the range R2.

The light-emitting element S22 has an on duration of T22 (T22 < T1) per cycle. As illustrated in Fig. 11(b), the light-emitting element S22 irradiates a range R4 that overlaps an upper portion of the range R3.

The light-emitting element S27 has an on duration of T27 (T27 < T1) per cycle. As illustrated in Fig. 11(b), the light-emitting element S27 irradiates a range R5 that overlaps an upper portion of the range R4.

The light-emitting element S26 has an on duration of T26 (T26 < T1) per cycle. As illustrated in Fig. 11(b), the light-emitting element S26 irradiates a range R6 that overlaps an upper portion of the range R5.

The relationship among the on durations of the respective light-emitting elements is T27 ≤ T32 < T26 < T23 < T22 < T31 < T21 < T1.

The controller 29 can form the fourth light-distribution pattern in which the cutoff line on the host vehicle's lane side rises obliquely or stepwise toward the outer side, as illustrated in Fig. 11(b), by not only selecting the light-emitting elements to be turned on but also controlling the on durations of the respective light-emitting elements to be turned on. In this manner, the optical unit according to the present embodiment can form a light-distribution pattern having an oblique cutoff line suitable a vehicle headlamp.

As described above, the optical unit 18 according to the present embodiment includes the first light source 20 having a plurality of light-emitting elements (S11 to S15, S21 to S29, S31, and S32) disposed in arrays, the rotary reflector 22 that rotates while reflecting light emitted from the first light source 20, and the controller 29 that controls the on state of the plurality of light-emitting elements. The rotary reflector 22 includes a reflective surface provided to form a light-distribution pattern by scanning the light reflected by the rotating rotary reflector 22 as light source images (L11 to L15, L22 to L29, L31 and L32), and the plurality of light-emitting elements include the first light-emitting elements (S11 to S15) and the second light-emitting elements (S21 to S29, S31, and S32). The controller 29 controls the on state of the first light-emitting elements and the second light-emitting elements (or third light-emitting elements) such that the on duration T1 of the first light-emitting elements (S11 to S15) becomes longer than an on duration T2 (T2 > 0) of the second light-emitting elements (S21 to S29). The plurality of light-emitting elements that are to have different on durations can be combined in any manner.

The optical unit 18 according to the present embodiment can provide a difference between the length of a region formed as the light emitted from the first light-emitting elements (S11 to S15) is scanned as light source images and the length of a region formed as the light emitted from the second light-emitting elements (S21 to S29) is scanned as light source images. This configuration makes it possible to form a greater number of light-distribution patterns with different shapes as compared to a case in which the status of each light-emitting element can be selected only from being continuously on and being continuously off.

In the first light source 20, the first light-emitting element (S12), the second light-emitting elements (S22, S26), and the third light-emitting element (S31) are arrayed in a direction intersecting a direction D1 in which the light is scanned as light source images. This configuration can form a step-like light-distribution pattern with a small number of light-emitting elements.

The third light-emitting element S32 according to the present embodiment is so disposed as to scan the region (R2) that overlaps a region (range R1) that the first light-emitting elements S11 to S15 scan and a region (R3 to R6) that the second light-emitting elements S21 to S29 scan. The controller 29 controls an output of the third light-emitting element S32 such that a duration T3 (T32) for which the third light-emitting element is on satisfies T1 > T3 > T2. This configuration can form a step-like light-distribution pattern with a smaller step.

In the first light source 20 according to the present embodiment, a plurality of light-emitting elements are disposed in a matrix of m rows by n columns (m and n are each an integer no smaller than 2; in the first light source 20, m is 5, and n is 4), and the light-emitting elements in a (k-1)th column are disposed unlevel with the light-emitting elements in a kth column by approximately one half of a pitch (k is an integer no greater than n). In this case, a step-like light-distribution pattern with a smaller step can be formed as compared to a case in which the light-emitting elements in adjacent columns are not unlevel with each other by one half of a pitch.

### [Second Embodiment]

A primary feature of an optical unit according to a second embodiment lies in that the first light source has a different configuration, and there is no substantial difference from the first embodiment in other respect. Therefore, the first light source will be described below in detail.

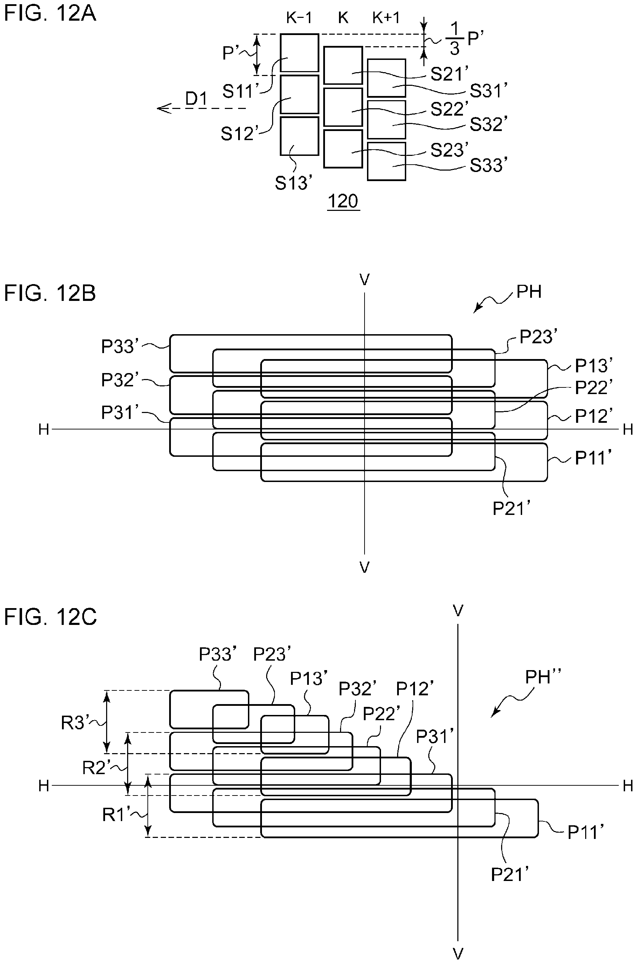

Fig. 12(a) is a schematic diagram in which a light source according to the second embodiment is viewed from the front, Fig. 12(b) illustrates a high-beam light-distribution pattern formed by the optical unit according to the second embodiment, and Fig. 12(c) illustrates another high-beam light-distribution pattern formed by the optical unit according to the second embodiment.

In a first light source 120 illustrated in Fig. 12(a), nine light-emitting elements S11' to S31' are disposed in a matrix of m rows by n columns (m and n are each an integer no smaller than 2; in the first light source 120, m is 3, and n is 3), and the light-emitting elements S11' to S13' in a (k-1)th column are disposed unlevel with the light-emitting elements S21' to S23' in a kth column by one third of a pitch (one pitch = p') (k is an integer no greater than n).

The optical unit 18 including the first light source 120 configured in this manner can form not only a high-beam light-distribution pattern PH illustrated in Fig. 12(b) but also a partial high-beam light-distribution pattern PH" having an oblique cutoff line illustrated in Fig. 12(c).

In the high-beam light-distribution pattern PH illustrated in Fig. 12(b), scan patterns P11' to P33' formed as the light source images of the light-emitting elements S11' to S33' are scanned are superposed on each other.

In the partial high-beam light-distribution pattern PH" illustrated in Fig. 12(c) as well, the scan patterns P11' to P33' formed as the light source images of the light-emitting elements S11' to S33' are scanned are superposed on each other, but the partial high-beam light-distribution pattern PH" differs in terms of the on durations of the respective light-emitting elements.

The light-emitting elements S11', S21', and S31' have the longest on duration T1' per cycle, and as the scan patterns P11', P21', and P31' illustrated in Fig. 12(c) are formed and these scan patterns are superposed on each other, the light-emitting elements S11', S21', and S31' irradiate mainly a range R1' below the horizontal line.

The light-emitting element S12' has an on duration of T12' (T12' < T1') per cycle, the light-emitting element S22' has an on duration of T22' (T22' < T1') per cycle, and the light-emitting element S32' has an on duration of T32' (T32' < T1') per cycle. As illustrated in Fig. 12(c), the light-emitting elements S12', S22', and S32' irradiate mainly a range R2' including the H-H line on the host vehicle's lane side and a space immediately above the H-H line. The range R2' partially overlaps the range R1'.

The light-emitting element S13' has an on duration of T13' (T13' < T1') per cycle, the light-emitting element S23' has an on duration of T23' (T23' < T1') per cycle, and the light-emitting element S33' has an on duration of T33' (T33' < T1') per cycle. As illustrated in Fig. 12(c), the light-emitting elements S13', S23', and S33' irradiate mainly a range R3' above the H-H line on the host vehicle's lane side. The range R3' partially overlaps the range R2'.

The relationship among the on durations of the respective light-emitting elements is T13', T23', T33' < T12', T22', T32' < T1.

The controller 29 can form a light-distribution pattern in which the cutoff line on the host vehicle's lane side rises obliquely or stepwise toward the outer side, as illustrated in Fig. 12(c), by not only selecting the light-emitting elements to be turned on but also controlling the on durations of the respective light-emitting elements to be turned on. In this manner, the optical unit according to the present embodiment can form a light-distribution pattern having an oblique cutoff line suitable for a vehicle headlamp.

In addition, in the first light source 120 according to the second embodiment, the light-emitting elements in adjacent columns are disposed unlevel with each other by one third of a pitch. Therefore, the step between the scan patterns contributing to forming an oblique cutoff line is smaller as compared to a case in which the light-emitting elements are disposed unlevel with each other by approximately one half of a pitch as in the first light source 20 according to the first embodiment. As a result, a light-distribution pattern having a smoother oblique cutoff line can be obtained.

### [Third Embodiment, which does not form part of the invention]

In the vehicle headlamp 10 according to the first embodiment, each blade 22a of the rotary reflector 22 has a twisted shape in which the angle formed by the optical axis Ax and the reflective surface changes along the circumferential direction about the axis of rotation R. In contrast, in the vehicle headlamp 10 according to a third embodiment, which does not form part of the invention, a polygon mirror is used as a rotary reflector, and there is no substantial difference from the first embodiment in other respect. Therefore, the rotary reflector will be described below in detail. Components identical to those in the first embodiment are given identical reference characters, and descriptions thereof will be omitted as appropriate.

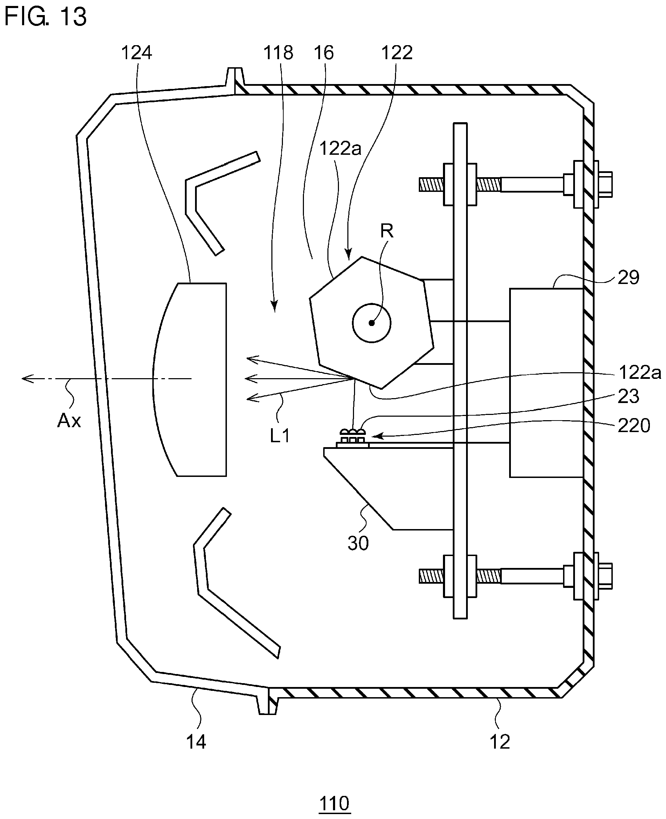

Fig. 13 is a horizontal sectional view of a vehicle headlamp according to the third embodiment. A vehicle headlamp 110 according to the third embodiment includes the lamp body 12 having a concave portion that opens toward the front. The front opening of the lamp body 12 is covered by the transparent front cover 14 to form the lamp room 16. The lamp room 16 functions as a space that houses one optical unit 118. The optical unit 118 is a lamp unit configured to be capable of emitting both a variable high beam and a low beam.

The optical unit 118 according to the present embodiment includes a light source 220, the condenser lens 23, a polygon mirror 122, a projection lens 124, and the controller 29. The condenser lens 23, serving as a primary optical system (optical member), redirects the optical path of the first light L1 emitted from the light source 220 toward a reflective surface 122a of the polygon mirror 122. The polygon mirror 122 rotates about an axis of rotation R while reflecting the first light L1.

The light source 220 includes a plurality of elements disposed in a matrix. The projection lens 124 condenses the first light L1 reflected by the polygon mirror 122 and projects the condensed first light L1 in the light-irradiation direction (the left direction in Fig. 1) of the optical unit. This configuration can project a clear light source image toward a space ahead of the optical unit 118.

The polygon mirror 122 rotates with a driving source, such as a motor, unidirectionally about the axis of rotation R. The polygon mirror 122 includes the reflective surface 122a provided to form a desired light-distribution pattern by scanning light from each light source reflected by the rotating polygon mirror 122. In other words, the rotating operation of the polygon mirror 122 causes visible light from a light emitter to be emitted as an irradiation beam, and a desired light-distribution pattern is formed as the polygon mirror 122 scans the irradiation beam.

The axis of rotation R of the polygon mirror 122 is substantially perpendicular to the optical axis Ax and intersects a plane that includes the optical axis Ax and the light source 220. To rephrase, the axis of rotation R is substantially orthogonal to a scanning plane of light (irradiation beam) from the light source that scans in the right-left direction as the polygon mirror 122 rotates. The vehicle headlamp 110 that includes such a polygon mirror 122 can also form a variety of light-distribution patterns described above.

### [Fourth Embodiment]

In each of the embodiments described above, the light source images reflected by a stationary rotary reflector and projected forward all have the same-sized rectangular shape. However, as the magnitude of an input current (power) is controlled (changed), each light-emitting element having a rectangular light-emitting surface can vary the size of a light source image in a stationary state.

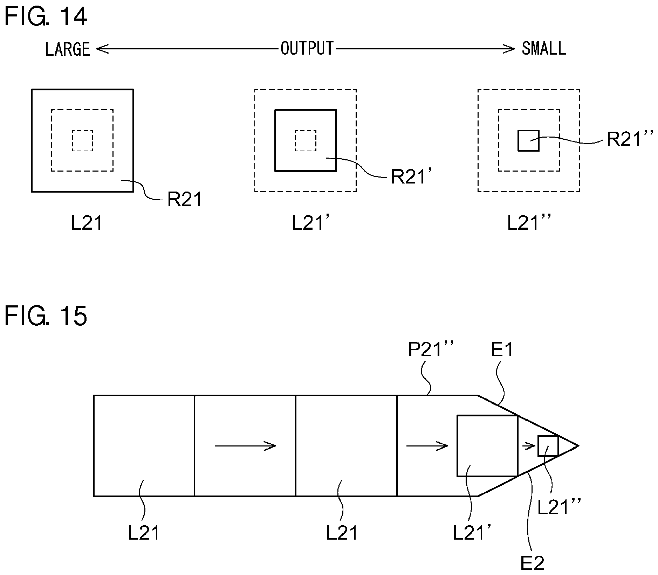

Fig. 14 is a schematic diagram for comparing the size of the light source images obtained when the output of a light-emitting element having a rectangular light-emitting surface is varied. The light source image L21 illustrated in Fig. 14 is obtained, for example, when a light-emitting element is caused to emit light at its working upper limit output (the quantity of light of 100%), and a range R21 enclosed by the solid line indicates a region having a luminous intensity higher than a predetermined luminous intensity. In the case of a typical light-emitting element, such as an LED, the center of the light-emitting surface is brightest, and the light-emitting surface tends to become less bright toward its outer periphery. The predetermined luminous intensity corresponds to such brightness that allows the user of the optical unit to recognize the region's edge as the outline of a light-distribution pattern when the light-distribution pattern is formed by scanning a light source image, for example.

A light source image L21' illustrated in Fig. 14 is obtained, for example, when a light-emitting element is caused to emit light at one half of its working upper limit output (the quantity of light of 50%), and a range R21' enclosed by the solid line indicates a region having a luminous intensity higher than the predetermined luminous intensity. The range R21' of the light source image L21' is smaller than the range R21 of the light source image L21.

A light source image L21" illustrated in Fig. 14 is obtained, for example, when a light-emitting element is caused to emit light at 10% of its working upper limit output (the quantity of light of 10%), and a range R21" enclosed by the solid line indicates a region having a luminous intensity higher than the predetermined luminous intensity. The range R21" of the light source image L21" is smaller than the range R21' of the light source image L21'.

In this manner, varying the output of the light-emitting element changes the range irradiated at the predetermined luminous intensity (the size of the light source image). Thus, the controller 29 can form a light-distribution pattern having a new shape by varying the output of the light-emitting elements when the light reflected by the rotating rotary reflector 22 is scanned as a light source image.

Fig. 15 is a schematic diagram illustrating an example of a light-distribution pattern. As illustrated in Fig. 15, the controller 29 drives a light-emitting element at its working upper limit output, and the light source image L21 is scanned from the left to the right in the drawing. Thereafter, the controller 29 starts reducing the output of the light-emitting element at a predetermined timing to gradually reduce the size of the light source image from the light source image L21, to the light source image L21', and to the light source image L21". Thus, a light-distribution pattern P21" is formed. The light-distribution pattern P21" is rectangular from its left end region to the center region, and an upper side E1 and a lower side E2 of the right end region are oblique. Therefore, the oblique upper side E1 of the light-distribution pattern P21" can be used as an oblique cutoff line.

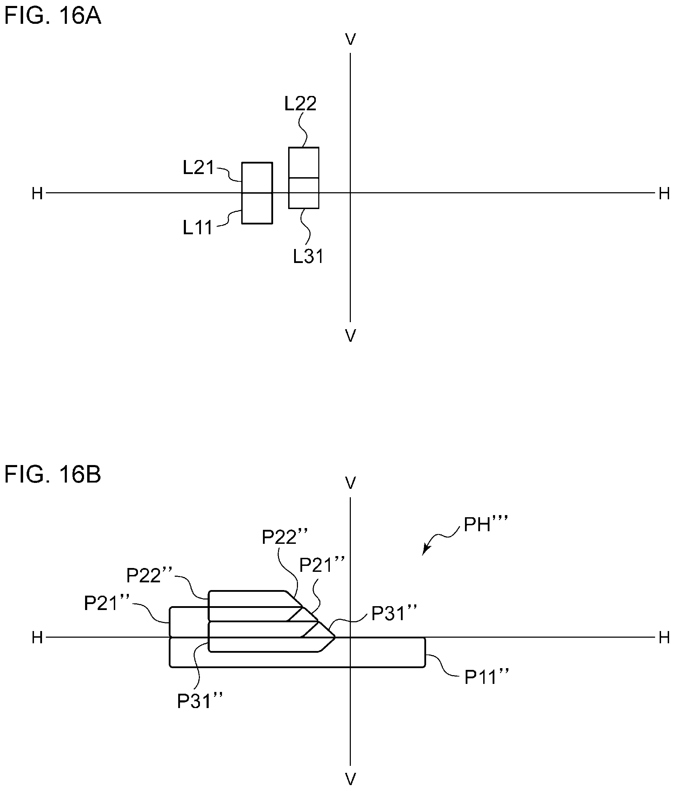

Fig. 16(a) is a schematic diagram illustrating a state in which a light source image of a light emitter that is on according to a fourth embodiment is reflected and projected forward by a stationary rotary reflector. Fig. 16(b) illustrates a fifth light-distribution pattern formed as the light source image illustrated in Fig. 16(a) is scanned by the rotating rotary reflector.

The light source images L11, L21, L22, and L31 illustrated in Fig. 16(a) correspond to the light-emitting surfaces of the respective light-emitting elements S11, S21, S22, and S31. When a fifth light-distribution pattern PH‴ is formed, the light-emitting element S11 has the longest on duration T1 per cycle, and a scan pattern P11" illustrated in Fig. 16(b) is formed. The light-emitting elements S21, S22, and S31 are controlled such that the output gradually decreases toward the end of the on duration per cycle, and a light-distribution pattern P21" and similar light-distribution patterns P22" and P31" illustrated in Fig. 15 are formed. Each scan pattern is so formed as to partially overlap its adjacent scan pattern.

The controller 29 can form the fifth light-distribution pattern PH‴ in which the cutoff line on the host vehicle's lane side rises obliquely or stepwise toward the outer side, as illustrated in Fig. 16(b), by not only selecting the light-emitting elements to be turned on but also controlling the on durations and the outputs of the respective light-emitting elements to be turned on. It is also possible to form a light-distribution pattern PH‴ in which the cutoff line on the oncoming vehicle's lane side rises obliquely or stepwise toward the outer side by control the output to gradually increase from the beginning of the on duration per cycle. In this manner, the optical unit according to the present embodiment can form a light-distribution pattern having an oblique cutoff line suitable for a vehicle headlamp.

Thus far, the present invention has been described with reference to the foregoing embodiments. The present invention, however, is not limited to the foregoing embodiments but rather by the appended claims.

### [DESCRIPTION OF THE REFERENCE NUMERALS]

10 vehicle headlamp, 18 optical unit, 20 first light source, 22 rotary reflector, 24 projection lens, 26 second light source, 29 controller, 34 motor, 36 first light emitter, 38 second light emitter, 40 third light emitter, 42 fourth light emitter, 100 control device, 110 vehicle headlamp, 118 optical unit, 120 first light source, 122 polygon mirror, 124 projection lens, 220 light source

### [INDUSTRIAL APPLICABILITY]

The present invention can find its use in vehicle lamps.

## Claims

1. An optical unit (18) for a vehicle headlamp, comprising:
a light source (20) having a plurality of light-emitting elements disposed in an array;
a rotary reflector (22) structured to rotate while reflecting light emitted from the light source (20); and
a controller (29) for controlling an on state of the plurality of light-emitting elements, wherein
the rotary reflector (22) includes a reflective surface provided to form a light-distribution pattern by scanning light reflected by the rotating rotary reflector as a light source image, wherein
the plurality of light-emitting elements include a first light-emitting element (S11-S15), a second light-emitting element (S21-S29), and a third light-emitting element (S31-S32), the first light-emitting element arranged for forming a low beam light-distribution pattern that irradiates a range below a horizontal line, the second light-emitting element arranged for forming a high beam light-distribution pattern that irradiates at least a range above the horizontal line, and
the third light-emitting element being so disposed as to scan a region that overlaps a region that the first light-emitting element scans and a region that the second light-emitting element scans,
in the light source, the first light-emitting element (S11-S15) and the second light-emitting element (S21-S29) are arrayed in a direction intersecting a direction in which the light is scanned as the light source image, and
**characterized in that** the controller (29) is structured to control the on state of the first light-emitting element, the second light-emitting element and the third light-emitting element such that an on duration T1 of the first light-emitting element arranged for forming the low beam light-distribution pattern, an on duration T2 (T2 > 0) of the second light-emitting element arranged for forming the high beam light-distribution pattern and on duration T3 of the third light-emitting element satisfy T1 > T3 > T2 and T2 > 0, so that the light-distribution pattern has a cutoff line across the horizontal line on a host vehicle's lane side that rises obliquely or stepwise toward an outer side.

2. The optical unit (18) according to claim 1, wherein
in the light source, the plurality of light-emitting elements are disposed in a matrix of m rows by n columns, wherein m and n are each an integer no smaller than 2, and the light-emitting element in a (k-1)th column are disposed unlevel with the light-emitting elements in a kth column by approximately one-nth of a pitch, wherein k is an integer no greater than n.

## Patentansprüche

1. Optische Einheit (18) für einen Fahrzeugscheinwerfer, umfassend:
eine Lichtquelle (20) mit einer Mehrzahl von lichtemittierenden Elementen, die in einer Array angeordnet ist;
einen Drehreflektor (22), der so aufgebaut ist, dass er sich dreht, während er Licht reflektiert, das von der Lichtquelle (20) emittiert wird; und
eine Steuerung (29) zum Steuern eines Ein-Zustands der Mehrzahl von lichtemittierenden Elementen, wobei
der Drehreflektor (22) eine reflektierende Oberfläche aufweist, die so vorgesehen ist, dass durch Abtasten von Licht, das von dem drehenden Drehreflektor reflektiert wird, ein Lichtverteilungsmuster als ein Lichtquellenbild gebildet wird, wobei
wobei die Mehrzahl von lichtemittierenden Elementen ein erstes lichtemittierendes Element (S11-S15), ein zweites lichtemittierendes Element (S21-S29) und ein drittes lichtemittierendes Element (S31-S32) aufweist, wobei das erste lichtemittierende Element zum Bilden eines Abblendlicht-Lichtverteilungsmusters ausgelegt ist, das einen Bereich unterhalb einer horizontalen Linie bestrahlt, das zweite lichtemittierende Element zum Bilden eines Fernlicht-Lichtverteilungsmusters ausgelegt ist, das zumindest einen Bereich oberhalb der horizontalen Linie bestrahlt, und
das dritte lichtemittierende Element so angeordnet ist, dass es eine Region abtastet, die eine Region, die das erste lichtemittierende Element abtastet, und eine Region überlappt, die das zweite lichtemittierende Element abtastet,
in der Lichtquelle das erste lichtemittierende Element (S11-S15) und das zweite lichtemittierende Element (S21-S29) in einer Richtung angeordnet sind, die eine Richtung schneidet, in der das Licht als das Lichtquellenbild abgetastet wird, und
**dadurch gekennzeichnet, dass** die Steuerung (29) so aufgebaut ist, dass sie den Ein-Zustand des ersten lichtemittierenden Elements, des zweiten lichtemittierenden Elements und des dritten lichtemittierenden Elements so steuert, dass eine Ein-Dauer T1 des ersten lichtemittierenden Elements zum Bilden des Abblendlicht-Lichtverteilungsmusters ausgelegt ist, eine Ein-Dauer T2 (T2 > 0) des zweiten lichtemittierenden Elements zum Bilden des Fernlicht-Lichtverteilungsmusters ausgelegt ist, und eine Ein-Dauer T3 des dritten lichtemittierenden Elements T1 > T3 > T2 und T2 > 0 erfüllt, sodass das Lichtverteilungsmuster eine Grenzlinie über die horizontale Linie auf einer Fahrspurseite des eigenen Fahrzeugs aufweist, die schräg oder stufenförmig in Richtung einer Außenseite ansteigt.

2. Optische Einheit (18) nach Anspruch 1, wobei
in der Lichtquelle die Mehrzahl von lichtemittierenden Elementen in einer Matrix von m Reihen mal n Spalten angeordnet ist, wobei m und n jeweils eine ganze Zahl nicht kleiner als 2 sind und die lichtemittierenden Elemente in einer (k - 1)-ten Spalte um ungefähr ein n-tel eines Abstands versetzt zu den lichtemittierenden Elemente in einer k-ten Spalte angeordnet sind, wobei k eine ganze Zahl nicht größer als n ist.

## Revendications

1. Unité optique (18) pour un phare de véhicule, comprenant :
une source lumineuse (20) ayant une pluralité d'éléments électroluminescents disposés en réseau ;
un réflecteur rotatif (22) structuré pour tourner tout en réfléchissant la lumière émise par la source lumineuse (20) ; et
un dispositif de commande (29) pour commander un état actif de la pluralité d'éléments électroluminescents, dans lequel
le réflecteur rotatif (22) comprend une surface réfléchissante prévue pour former un modèle de répartition de la lumière en balayant la lumière réfléchie par le réflecteur rotatif en rotation en tant qu'une image de la source lumineuse, dans laquelle
la pluralité d'éléments électroluminescents comprend un premier élément électroluminescent (S11-S15), un deuxième élément électroluminescent (S21-S29) et un troisième élément électroluminescent (S31-S32), le premier élément électroluminescent étant agencé pour former un modèle de répartition de la lumière de faisceau bas qui irradie une zone située en dessous d'une ligne horizontale, le deuxième élément électroluminescent étant agencé pour former un modèle de répartition de la lumière de faisceau haut qui irradie au moins une zone située au-dessus de la ligne horizontale, et
le troisième élément électroluminescent étant disposé de manière à balayer une région qui chevauche une région que le premier élément électroluminescent balaie et une région que le deuxième élément électroluminescent balaie,
dans la source lumineuse, le premier élément électroluminescent (S11-S15) et le deuxième élément électroluminescent (S21-S29) sont disposés en réseau dans une direction qui coupe une direction dans laquelle la lumière est balayée en tant que l'image de la source lumineuse, et
**caractérisée en ce que**
le dispositif de commande (29) est structuré de manière à commander l'état actif du premier élément électroluminescent, du deuxième élément électroluminescent et du troisième élément électroluminescent, de sorte qu'une durée active T1 du premier élément électroluminescent agencé pour former le modèle de répartition de la lumière de faisceau bas, une durée active T2 (T2 > 0) du deuxième élément électroluminescent agencé pour former le modèle de répartition de la lumière de faisceau haut, et une durée active T3 du troisième élément électroluminescent satisfont T1 > T3 > T2 et T2 > 0, de sorte que le modèle de répartition de la lumière présente une ligne de coupure, à travers la ligne horizontale du côté voie d'un véhicule hôte, qui s'élève obliquement ou par paliers vers un côté extérieur.

2. Unité optique (18) selon la revendication 1, dans laquelle
dans la source lumineuse, la pluralité d'éléments électroluminescents est disposée dans une matrice de m lignes par n colonnes, dans laquelle m et n sont chacun un nombre entier non inférieur à 2, et l'élément électroluminescent dans une (k-1)^{ième} colonne est disposé en décalage par rapport aux éléments électroluminescents dans une k^{ième} colonne d'environ un nième de pas, dans lequel k est un nombre entier non supérieur à n.
